# EUROPEAN PATENT APPLICATION

(11) **EP 2 978 280 A2**
(43) Date of publication of application: **27.01.2016**
(21) Application number: 15177438.7
(22) Date of filing: 20.07.2015
(51) Int. Cl.: H05B 33/08

(54) **POWER CONVERTER AND METHOD FOR DRIVING THE SAME**

(30) Priority: 23.07.2014 KR 20140093197
(71) Applicant: Samsung Electro-Mechanics Co., Ltd., Suwon-Si, Gyeonggi-Do 443-743 (KR)
(72) Inventor: KO, Tae Seok, Gyeonggi-do 443-743 (KR); JANG, Young Su, Gyeonggi-do 443-743 (KR)
(74) Representative: Grünecker Patent- und Rechtsanwälte PartG mbB

(57) **Abstract**

A power converter having a wide range of an output voltage may include a power supply unit supplying a driving current to a load, a sensing unit sensing a magnitude of the driving current, a first switch controlling an on/off time to control a flow of the driving current, and a control unit operated by being divided into constant current driving and average current driving corresponding to the magnitude of the driving current sensed by the sensing unit. The control unit may controls the power supply unit in the constant current driving so as to make the magnitude of driving current be a predetermined value, and control an on/off time in the average current driving to make an average magnitude of the driving current be the predetermined value.

## Description

### CROSS-REFERENCE TO RELATED APPLICATION

This application claims the foreign priority benefit under 35 U.S.C. Section 119 of Korean Patent Application No. 10-2014-0093197, entitled "Power Converter And Method For Driving The Same" filed on July 23, 2014, which is hereby incorporated by reference in its entirety into this application.

### BACKGROUND

Some embodiments of the present disclosure relates to a power converter and a method for driving the same.

Generally, a power converter for light emitting diode (LED) lighting may control a current to be constantly supplied to an LED module, thereby keeping constant brightness. For example, a pulse width modulation (PWM) method, a pulse frequency modulation (PFM) method, or the like may be used for the power converter for LED lighting to control the current to be constantly supplied to the LED module. In the case of the LED module, an LED forward voltage Vf may be determined depending on the number of LEDs which are connected in series and/or in parallel and power consumption of each LED. Further, the power converter for LED lighting has a preset range of an output voltage. When the Vf of the LED module is within the predefined range of the output voltage, the power converter for LED lighting may control the current supplied to the LED module to make the LED module constantly emit desired light. However, when the Vf of the LED module is out of the predetermined range of the output voltage, the power converter for LED lighting may not control the current supplied to the LED module and therefore the LED module may not constantly emit light.

### SUMMARY

Some embodiments of the present disclosure may provide a power converter having a wide range of an output voltage and a method for driving the same.

According to an exemplary embodiment of the present disclosure, a power converter may include: a power supply unit supplying a driving current to a load; a sensing unit sensing a magnitude of the driving current; a first switch controlling an on/off time to control a flow of the driving current; and a control unit operated by being divided into constant current driving and average current driving corresponding to the magnitude of the driving current sensed by the sensing unit. The control unit may control the power supply unit in the constant current driving so as to make the magnitude of driving current be a predetermined value, and may control an on/off time in the average current driving to make an average magnitude of the driving current be the predetermined value.

According to another exemplary embodiment of the present disclosure, a power converter may include: a power supply unit supplying a driving current to a load; a sensing unit sensing a magnitude of the driving current; a first switch controlling an on/off time to control a flow of the driving current; and a control unit controlling the magnitude of the driving current supplied from the power supply unit to the load and a switching operation of the first switch. The control unit may control the power supply unit depending on or responding to the sensed result by the sensing unit to control the magnitude of the driving current supplied from the power supply unit. When the magnitude of the driving current exceeds a predetermined value, the control unit may control the on/off time of the first switch to control an average of the magnitude of the driving current to be the predetermined value.

According to still another exemplary embodiment of the present disclosure, there may be provided a method for driving a power converter including a power supply unit controlling a current flowing in an inductor to generate a driving current. The method may include: sensing the driving current flowing in a load; controlling an amount of a current flowing in the inductor corresponding to the sensed driving current to control a magnitude of the driving current; and if it is determined that the sensed magnitude of driving current exceeds a predetermined value, turning on/off a flow of the driving current to make an average of the magnitude of driving current be the predetermined value.

### BRIEF DESCRIPTION OF DRAWINGS

FIG. 1 is a structure diagram illustrating a power converter according to an exemplary embodiment of the present disclosure.
FIG. 2 is a circuit diagram illustrating an exemplary embodiment of the power converter illustrated in FIG. 1.
FIG. 3A is a circuit diagram illustrating an exemplary embodiment of a power supply unit illustrated in FIG. 1.
FIG. 3B is a circuit diagram illustrating another exemplary embodiment of the power supply unit illustrated in FIG. 1.
FIG. 4A is a graph illustrating an operation of a first control module illustrated in FIGS. 1 and 2.
FIG. 4B is a graph illustrating an operation of the first control module illustrated in FIGS. 1 and 2.
FIG. 4C is a graph illustrating an operation of a second control module illustrated in FIGS. 1 and 2.
FIG. 5A is a graph illustrating a driving current flowing in a load in a constant current section by a control unit illustrated in FIGS. 1 and 2.
FIG. 5B is a graph illustrating a driving current flowing in a load in an average current section by the control unit illustrated in FIGS. 1 and 2.
FIG. 5C is a graph illustrating a driving current flowing in a load in the average current section by the control unit illustrated in FIGS. 1 and 2.
FIG. 6 is a flow chart illustrating a method for driving the power converter illustrated in FIGS. 1 and 2.

### DESCRIPTION OF EMBODIMENTS

Matters of an action effect and a technical configuration of a power converter and a method for driving the same according to an exemplary embodiment of the present disclosure to achieve the above object will be obvious by the following detailed description with reference to the drawings which illustrate exemplary embodiments of the present disclosure.

Further, when it is determined that the detailed description of the known art related to the present disclosure may obscure the gist of the present disclosure, the detailed description thereof will be omitted. In the description, the terms first, second, and so on are used to distinguish one element from another element, and the elements are not defined by the above terms.

Exemplary embodiments of the present disclosure will be described in detail with reference to the accompanying drawings. These exemplary embodiments will be described in detail for those skilled in the art in order to practice the present disclosure. It should be appreciated that various exemplary embodiments of the present disclosure are different from each other, but do not have to be exclusive. For example, specific shapes, structures, and characteristics described in the present specification may be implemented in another exemplary embodiment without departing from the spirit and the scope of the present disclosure in connection with an exemplary embodiment. In addition, it should be understood that a position or an arrangement of individual components in each disclosed exemplary embodiment may be changed without departing from the spirit and the scope of the present disclosure. Therefore, a detailed description described below should not be construed as being restrictive. In addition, the scope of the present disclosure is defined only by the accompanying claims and their equivalents if appropriate. Similar reference numerals will be used to describe the same or similar functions throughout the accompanying drawings.

Hereinafter, exemplary embodiments of the present disclosure will be described in detail with reference to the accompanying drawings so that those skilled in the art may easily practice the present disclosure.

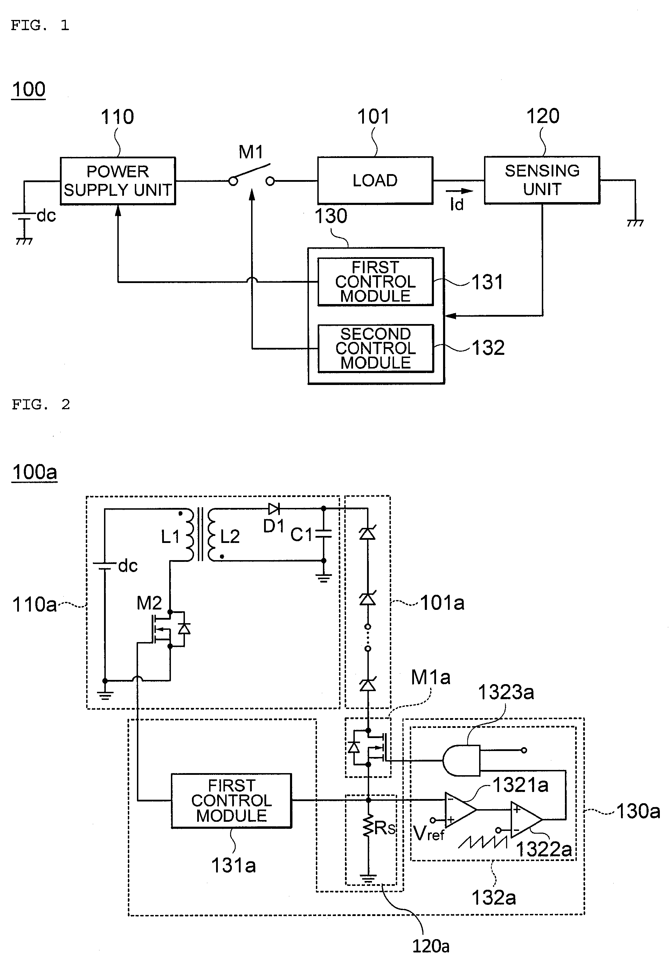

FIG. 1 is a structure diagram illustrating a power converter according to an exemplary embodiment of the present disclosure.

Referring to FIG. 1, a power converter 100 may include a power supply unit 110, a sensing unit 120, a first switch M1, and a control unit 130. The power supply unit 110 may supply a driving current Id to the load 101. The sensing unit 120 may sense a magnitude of the driving current Id. The first switch M1 may control an on/off time to control a flow of the driving current Id. The control unit 130 may perform a constant current driving operation and/or an average current driving operation corresponding to the magnitude of driving current Id sensed by the sensing unit 120. In the constant current driving operation, the control unit 130 may control the power supply unit 110 so as to make the magnitude of driving current Id be a predetermined value. In the average current driving operation, the control unit may control an on/off time to make an average magnitude of the driving current Id be the predetermined value.

The power supply unit 110 may receive power from a direct current (DC) power supply to output a predetermined voltage and transfer the driving current Id to the load 101. The DC power supply may be power obtained by rectifying alternating current (AC) power. When a voltage which is output from the power supply unit 110 is within a predetermined range and power consumption of the load 101 is within the predetermined range of the voltage output from the power supply unit 110, a magnitude of the driving current Id transferred from the power supply unit 110 to the load 101 may be preset and thus the driving current Id may constantly flow, such that the load 101 may operate normally. However, when the power consumption of the load 101 is smaller than the predetermined range of the voltage output from the power supply unit 110, the driving current Id may flow in the state in which the magnitude of driving current Id transferred from the power supply unit 110 to the load 101 may be more than the preset magnitude, such that the load 101 may not operate normally. Therefore, the power converter 100 may need to widen a range of an output voltage of the power converter 100 to apply various loads. To this end, the power supply unit 110 may perform a constant current driving operation and/or an average current driving operation. The constant current driving operation may make the magnitude of the driving current Id maintain a predetermined value, and the average current driving operation may make an average of the driving current Id maintain a predetermined value. Further, when the load 101 of which the power consumption is within the range of the voltage output from power supply unit 110 is connected to the power supply unit 110, the constant current driving may be operated. When the load 101 of which power consumption is out of the range of the voltage output from the power supply unit 110 is connected to the power supply unit 110, the average current driving may be operated.

The sensing unit 120 may sense the magnitude of the driving current Id flowing in the load 101. The sensing unit 120 may transfer the sensed magnitude of the driving current Id to the control unit 130.

The first switch M1 may be connected between the power supply unit 110 and the sensing unit 120. When the first switch M1 is turned on, the power supply unit 110 may be connected to the sensing unit 120 to make the driving current Id flow in the load 101, and when the first switch M1 is turned off, the power supply unit 110 may be disconnected from the sensing unit 120 to prevent the driving current Id from flowing in the load 101. Therefore, an on/off time of the first switch M1 may be controlled and thus the amount of the driving current Id supplied to the load 101 may be controlled. The turn on/off of the first switch M1 may be controlled by the controller 130. For example, in the exemplary embodiment of the present disclosure, the first switch M1 may be connected between the power supply unit 110 and the sensing unit 120 but is not limited thereto, and therefore the first switch M1 may be connected to any position at which a current generated from the power supply unit 110 may not flow in the load 101. Here, the first switch M1 is illustrated as a field effect transistor (FET) but is not limited thereto, and therefore may be an element which may be used as a switch such as a bipolar junction transistor (BJT) and a junction field effect transistor (JFET).

The control unit 130 may receive a sensed result of the magnitude of the driving current Id from the sensing unit 120 to perform a control operation. The control unit 130 may control the power supply unit 110 to be operated in the constant current driving when the magnitude of driving current Id sensed by the sensing unit 120 is a predetermined value or within a predetermined range and control the power supply unit 110 to be operated in the average current driving when the magnitude of the driving current Id sensed by the sensing unit 120 exceeds the predetermined value or is out of the predetermined range. The predetermined value of the driving current Id which is a reference value determining the constant current driving operation and/or the average current driving operation may have a constant range and thus when the magnitude of the driving current sensed by the sensing unit 120 is smaller or larger than the predetermined value within a predetermined range from the predetermined value, the control unit 130 may determine that the magnitude of the driving current is the predetermined value and perform the constant current driving operation. In the exemplary embodiment of the present disclosure, the control unit 130 may include a first control module 131 and a second control module 132. The first control module may control the power supply unit 110 in the constant current driving and the average current driving to generate the driving current Id. When the magnitude of driving current Id sensed by the sensing unit 120 exceeds the predetermined value or is out of the preset range, the second control module may control the on/off time of the first switch M1 to control the average of the magnitude of the driving current Id to be the predetermined value.

FIG. 2 is a circuit diagram illustrating an exemplary embodiment of the power converter illustrated in FIG. 1.

Referring to FIG. 2, a power converter 100a may include a power supply unit 110a, a sensing unit 120a, a first switch M1a, and a control unit 130a. The power supply unit 110a may supply a driving current Id to a load 101a. The sensing unit 120a may sense a magnitude of the driving current Id. The first switch M1a may control an on/off time to control a flow of the driving current Id. The control unit 130a may control the magnitude of driving current Id supplied from the power supply unit 110a to the load 101a and a switching operation of the first switch M1a. Additionally, the control unit 130a may control the power supply unit 110a depending on or responding to the sensed result by the sensing unit 120a to control the magnitude of the driving current Id supplied from the power supply unit 110a. When the magnitude of the driving current Id exceeds a predetermined value or is out of a predefined range, the control unit 130a may control the on/off time of the first switch M1a to control an average of the magnitude of the driving current Id to be the predetermined value or to be within the preset range.

The power supply unit 110a may include an inductor L1 and a second switch M2. The second switch M2 may be connected to an inductor L1. The power supply unit 110 may generate electromotive force in the inductor L1 corresponding or responding to the turn on/off of the second switch M2, generate a predetermined voltage and the driving current Id corresponding to the generated electromotive force, and transfer the generated voltage and the driving current Id to the load 101a. According to the exemplary embodiment of the present disclosure, the power supply unit 110 may be a flyback converter. The power supply unit 110 may include a DC power supply, a primary side inductor L1, a second switch M2 and a secondary side inductor L2. The primary side inductor L1 may be connected to the DC power supply. The second switch M2 may be connected to the primary side inductor L1 to control an amount of current flowing in the primary side inductor L1. The secondary side inductor L2 may receive electromotive force generated from the primary side inductor L1 to generate a driving current. However, the power supply unit 110 is not limited thereto and therefore may be, for example, a switch mode power converter such as a DC-DC converter. The load 101a connected to the power supply unit 110a may be an LED module. The LED module may include a plurality of light emitting diodes, in which the plurality of light emitting diodes may be connected in series and/or in parallel to emit light corresponding to the driving current Id. Power consumption of the LED module may have different values depending on the number of light emitting diodes and power consumption of each light emitting diode. For instance, the power consumption of the LED module may be referred to as an LED forward voltage Vf of the LED module.

Further, the voltage output from the power supply unit 110a may be determined depending on the power consumption of the load 101a such as the LED module connected to the power supply unit 110a. Further, the power supply unit 110a may receive a first control signal which controls a turn on/off of the second switch M2. Additionally, a predetermined voltage generated from the power supply unit 110a may have a predetermined range. The first control signal may control the turn on/off of the second switch M2 depending on a change in, for example, but not limited to, duty ratio and/or frequency.

The sensing unit 120a may include a resistor Rs and sense a voltage generated in the resistor Rs to sense the magnitude of the driving current Id flowing in the resistor Rs. Further, the sensing unit 120a may transfer the magnitude of the sensed driving current Id to the control unit 130a.

One terminal of the first switch M1a may be connected to the load 101a and the other terminal thereof may be connected to the sensing unit 120a.The control unit 130a may determine the turn on or off of the first switch M1a. A connection relationship of the first switch M1a may be different from that of the first switch M1 of FIG. 1 in which one terminal of the first switch M1 is connected to the power supply unit 110 and the other terminal thereof is connected to the load 101. For instance, a position of the first switch M1a which may switch the current flowing in the load 101a may be diverse. Further, the first switch M1a may be, for example, but not limited to, a MOS transistor, in which a source electrode of the MOS transistor may be connected to the load 101a, a drain electrode thereof may be connected to the sensing unit 120a, and a gate electrode thereof may be connected to the control unit 130a. Additionally, the turn on or off of the first switch M1a may be determined depending on a voltage applied to the gate electrode of the MOS transistor. The first switch M1a is not limited to the MOS transistor but various transistors such as the FET, the BJT, and the JFET may be used.

The control unit 130a may include a first control module 131a and a second control module 132a. The first control module 131a may output a first control signal which determines the turn on or off of the second switch M2. The second control module 132a may output a second control signal which determines the turn on or off of the first switch M1a. To determine the turn on or off of the second switch M2, the first control module 131a may output the first control signal which may control a duty ratio which is a ratio of the turn on time to the turn off time of the second switch M2 or control a frequency which changes a period of the turn on/off of the second switch M2. The second control module 132a may compare a magnitude of the current sensed by the sensing unit 120a with a reference current or a reference current range to determine whether the magnitude of the driving current Id exceeds a predetermined value or is out of the reference current range. Further, if it is determined that the magnitude of the driving current Id exceeds the magnitude of the reference current or is out of the reference current range, the second control module 132a may output the second control signal which controls the on/off time corresponding to the magnitude of the driving current Id. The second control module 132a may include a comparator 1321a and a signal output device 1322a. The comparator 1321a may have a negative (-) input terminal applied with a voltage corresponding to the driving current Id sensed by the sensing unit 120a and a positive (+) input terminal applied with a voltage corresponding to the reference current. The signal output device 1322a may have a positive (+) input terminal applied with an output signal of the comparator 1321a and a negative (-) input terminal applied with a predetermined pulse, for example, but not limited to, a sawtooth wave to output the second control signal which may control a duty ratio which is a ratio of a turn on signal to a turn off signal corresponding to the output signal of the comparator 1321a. The second control module 132a may further include an AND gate 1323a. The AND gate 1323a may be configured to perform a calculation and output the second control signal and a dimming signal to control the on/off time of the first switch M1a, thereby controlling the current supplied to the load 101a. For instance, when the load 101a is the LED module, the second control module 132a may control the second control signal and the dimming signal to control the brightness of the LED module.

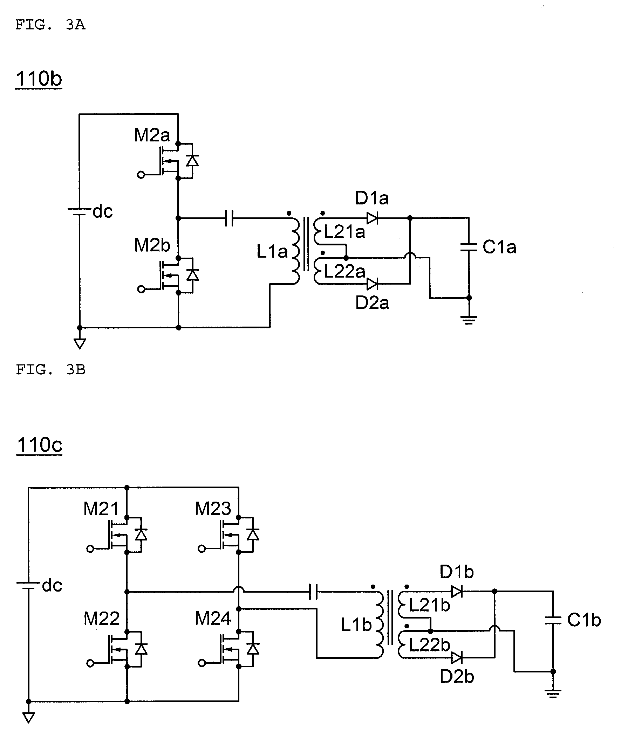

FIG. 3A is a circuit diagram illustrating an exemplary embodiment of a power supply unit illustrated in FIG. 1.

Referring to FIG. 3A, in a power supply unit 110b, a first transistor M2a and a second transistor M2b may be connected to a DC power supply in series. The first transistor M2a and the second transistor M2b each may receive a control signal from the first control module 131 of FIG. 1 and thus may be alternately turned on/off. Further, a direction of current flowing in a primary side inductor L1a may be changed by a switching operation of the first transistor M2a and the second transistor M2b. Additionally, a current may be induced to each of the first secondary side inductor L21a and the second secondary side inductor L22a corresponding to the direction of current flowing in the primary side inductor L1a. Further, the induced current may be supplied to the load.

FIG. 3B is a circuit diagram illustrating another exemplary embodiment of the power supply unit illustrated in FIG. 1.

Referring to FIG. 3B, in a power supply unit 110c, a first transistor to a fourth transistor M21 to M24 may be connected to a DC power supply in a bridge form. The first transistor to the fourth transistor M21 to M24 each may receive a control signal from the first control module 131 of FIG. 1 to perform a switching operation. For example, when the first transistor M21 and the fourth transistor M24 are turned on, the second transistor M22 and the third transistor M23 may be turned off, and when the first transistor M21 and the fourth transistor M24 are turned off, the second transistor M22 and the third transistor M23 may be turned on. Further, the first transistor to the fourth transistor M21 to M24 may have different phases and be turned on/off. Additionally, a direction of current flowing in a primary side inductor L1b may be changed by the switching operation of the first transistor to the fourth transistor M21 to M24. In addition, a current may be induced to each of a first secondary side inductor L21b and a second secondary side inductor L22b corresponding to the direction of current flowing in the primary side inductor L1b. Further, the induced current may be supplied to the load.

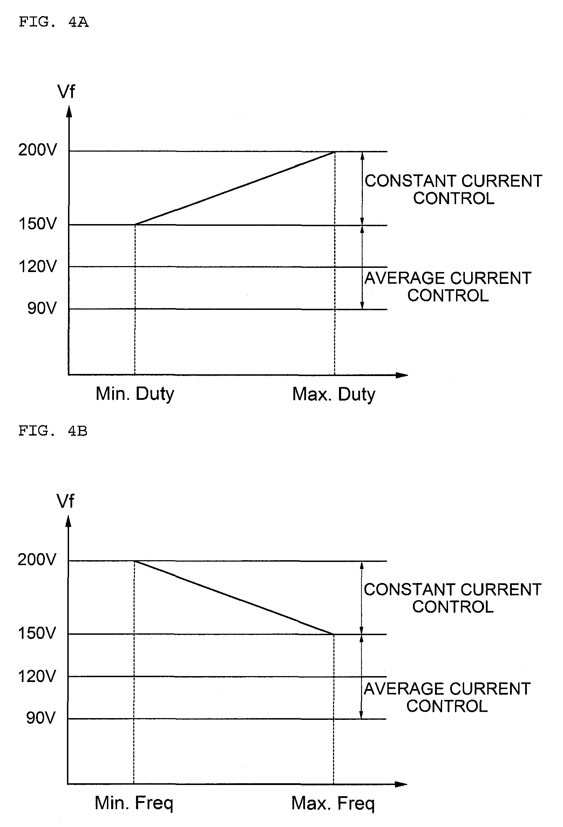

FIGS. 4A and 4B are graphs illustrating an operation of the first control module illustrated in FIGS. 1 and 2, and FIG. 4C is a graph illustrating an operation of the second control module illustrated in FIGS. 1 and 2.

As illustrated in FIGS. 4A and 4B, the first control module 131 or 131a may control a duty ratio or a frequency to perform a constant current control. For example, in the case of controlling the duty ratio when the range of the output voltage from the power supply unit 110 or 110a is between 150 V and 200 V, when the power supply unit 110 or 110a is connected to the load 101 or 101a such as an LED module having the power consumption of 150 V, the duty ratio may be minimized and thus the power supply unit 110 or 110a may be operated to meet the power consumption of 150 V in the loads 101 or 101a. And, when the power supply unit 110 or 110a is connected to the load 101 or 101a such as an LED module having the power consumption of 200 V, the duty ratio may be maximized and thus the power supply unit 110 or 110a may be operated to meet the power consumption of 200 V in the load 101 or 101a. In this case, the duty ratio may mean, for example, but not limited to, the ratio of on time to off time of the second switch M2. And, the minimum duty ratio may mean, for instance, but not limited to, the case in which the on time is short and the off time is long, and the maximum duty ratio may mean, for example, but not limited to, the case in which the on time is long and the off time is short. Further, the maximum duty ratio may mean the case in which the second switch M2 maintains the turn on state. For instance, in the case of controlling the frequency, when the power supply unit 110 or 110a is connected to the load 101 or 101a such as the LED module having the power consumption of 150V, the switching frequency of the second switch M2 may be maximized, and when the power supply unit 110 or 110a is connected to the load 101 or 101a such as the LED module having the power consumption of 200V, the switching frequency of the second switch M2 may be minimized. Further, when the power supply unit 110 or 110a is connected to the load 101 or 101a having the power consumption of 90 V or 120 V which may be out of the predetermined range of the output voltage from the power supply unit 110 or 110a, in the case in which the first control module 131 or 131a controls the duty ratio, like the case in which the power supply unit 110 or 110a is connected to the load 101 or 101a having the power consumption of 150 V, the duty ratio may be minimized. And, when the first control module 131 or 131a controls the frequency, like the case in which the power supply unit 110 or 110a is connected to the load 101 or 101a having the power consumption of 150 V, the switching frequency of the second switch M2 may be maximized.

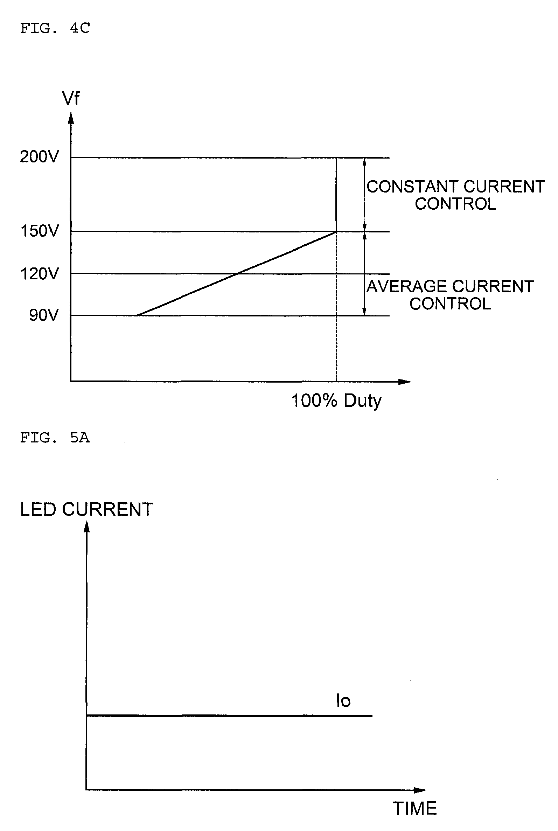

Further, as illustrated in FIG. 4C, the second control module 132 or 132a may control the duty ratio to control an average current. For instance, as shown in FIG. 4C, when the range of the output voltage has from 150 to 200 V, in the case in which the power supply unit 110 or 110a is connected to the load 101 or 101a having the power consumption ranging from 150 to 200 V, the second control module 132 or 132a may control the duty ratios of the first switch M1 or M1a to be 100% for the constant current control. The duty ratio of 100% may mean, for instance, but not limited to, that the first switch M1 or M1a keeps a turn on state. Further, the power supply unit 110 or 110a may be connected to the load 101 or 101a having the power consumption of, for example, but not limited to, 90 V, 120 V, or the like which may be out of the range of the output voltage from the power supply unit 110 or 110a, the second control module 132 or 132a may control the duty ratio of the first switch M1 or M1a to control the average current to make the average of the driving current be the predetermined value.

FIG. 5A is a graph illustrating a driving current flowing in a load in a constant current section by the control unit illustrated in FIGS. 1 and 2 and FIGS. 5B and 5C are graphs illustrating a driving current flowing in a load in an average current section by the control unit illustrated in FIGS. 1 and 2.

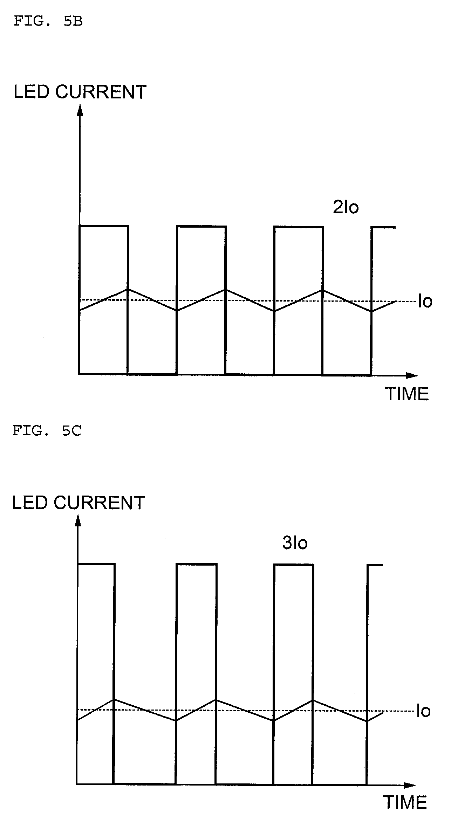

As illustrated in FIG. 5A, when the magnitude of the driving current sensed by the sensing unit 120 or 120a is a predetermined value Io, only the first control module 131 or 131a may be operated and the second control module 132 or 132a may not be operated, and thus since the first switch M1 or M1a may keep the turn on state, the magnitude of the driving current Id flowing in the load 101 or 101a such as the LED module may be constantly kept to have the magnitude of the predetermined value Io. However, as illustrated in FIG. 5B, when the magnitude of the driving current Id sensed by the sensing unit 120 or 120a is 2Io which is two times as large as the predetermined value, the on / off time of the first switch M1 or M1a may be controlled to have a section or period in which the driving current Id flows and a section or period in which the driving current Id does not flow. In this case, since the magnitude of the sensed driving current Id is two times as large as the predetermined value, the average current may have the magnitude of Io which is the predetermined value when a control is performed by setting the duty ratio to be 50%. Further, as illustrated in FIG. 5C, when the magnitude of the driving current Id sensed by the sensing unit 120 or 120a is 3Io which is three times as large as the predetermined value, the on / off time of the first switch M1 or M1a may be controlled to have a section or period in which the driving current Id flows and a section or period in which the driving current Id does not flow. In this case, since the magnitude of the sensed driving current Id is three times as large as the predetermined value, the average current may have the magnitude of Io which is the predetermined value when a control is performed by setting the duty ratio to be 33%. Here, the magnitude of the driving current Id and the duty ratio are exemplified and therefore are not limited thereto.

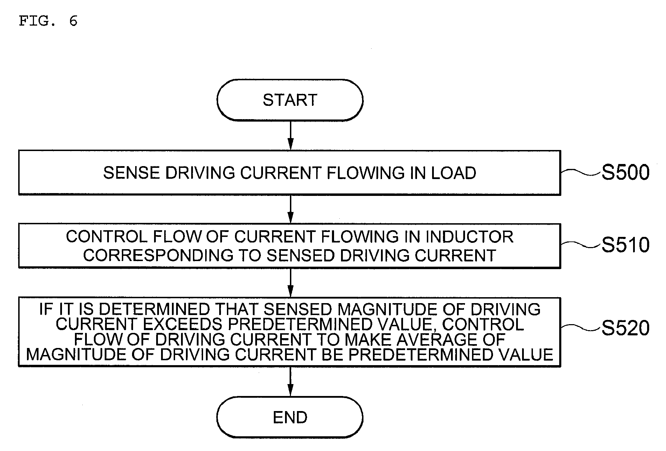

FIG. 6 is a flow chart illustrating a method for driving the power converter illustrated in FIGS. 1 and 2.

Referring to FIG. 6, in the method for driving the power converter 100 or 100a, the sensing unit 120 or 120a may sense the driving current flowing in the load 101 or 101a such as the LED module (S500). For example, the power converter 100 may include the power supply unit 110 which may control the current flowing in the inductor L1 to generate the driving current. The power supper unit 110 may supply the driving current Id to the load 101 corresponding to the current flowing in the inductor L1. Further, the sensing unit 120 or 120a may sense the driving current Id supplied to the load 101 or 101a. The load 101 or 101a may be, for instance, but not limited to, the LED module.

Further, the amount of current flowing in the inductor corresponding to the sensed driving current Id may be controlled and thus the magnitude of the driving current may be controlled (S510). To control the amount of the driving current Id flowing in the load 101 or 101a, the turn on or off operation of the second switch M2 connected to the inductor L1 may be controlled and thus the amount of current flowing in the inductor L1 may be controlled, thereby controlling the magnitude of the driving current. The turn on or off operation of the second switch M2 may allow the control unit 130 or 130a to output the first control signal corresponding to the driving current Id sensed by the sensing unit 120 or 120a for the control. The first control signal may use any one of the duty ratio control which may control the ratio of the turn on time of the second switch M2 to the turn off time of the second switch M2 and the frequency control which may change the period of the turn on time and the turn off time. The second control signal may control the duty ratio or may change the frequency depending on the magnitude of the sensed driving current Id to control the turn on or off operation of the second switch M2.

Further, when it is determined that the magnitude of the sensed driving current Id exceeds the predetermined value is out of the preset range, the flow of the driving current may be turned on/off and thus the average of the magnitude of driving current may be the predetermined value or be within the predetermined range (S520). For example, the turn on/off of the flow of the driving current may be achieved by controlling the on/off time of the first switch M1 or M1a. When the magnitude of the sensed driving current Id exceeds the predetermined value or is out of the preset range, the magnitude of the driving current Id may not be controlled to be the predetermined value or be within the present range only by the turn on or off operation of the second switch M2. To prevent this, the on/off time of the first switch M1 or M1a connected between the load 101 or 101a and the sensing unit 120 or 120a may be controlled and thus the average of the driving current Id flowing in the load 101 or 101a may be the predetermined value. The turn on or off operation of the first switch M1 or M1a may be controlled by the second control signal, and the first control signal may control the ratio of the turn on time of the first switch M1 or M1a to the turn off time of the first switch M1 or M1a to make the average of the driving current Id be the predetermined value. The predetermined value may be, for example, but not limited to, the magnitude of current flowing in the load 101 or 101a when the power supply unit 110 or 110a is connected to the load 101 or 101a having the power consumption meeting the range of the output voltage.

According to the power converter and the method for driving the same according to some exemplary embodiments of the present disclosure, since the range of the output voltage of the power converter may be wide, the load such as the LED module having diverse power consumption may be connected to one power converter to perform the desired operation.

In the claims of the present disclosure, elements expressed as a unit for performing specific functions include any method of performing a specific function and these elements may include a combination of circuit elements performing the specific function or any type of software including a firmware, a microcode, and the like which are coupled with circuits suitable to perform software for performing the specific functions.

In the present specification, 'one exemplary embodiment' of principles of the present disclosure and various changes of the expression means that specific features, structures, characteristics, and the like, associated with the exemplary embodiment are included in at lease one exemplary embodiment of the principle of the present disclosure Therefore, the expression 'on exemplary embodiment' and any other modification examples disclosed throughout the present specification do not necessarily mean the same exemplary embodiment.

The designation of various changes of expressions such as 'connected' and 'connecting', and the like in the present specification means that one element may be connected directly to or coupled directly to another element or be connected to or coupled to another element, having the other element intervening therebetween. Unless explicitly described to the contrary, a singular form includes a plural form in the present specification. In addition, components, steps, operations, and elements mentioned "comprise" or "comprising" in the present specification do not exclude the existence or addition of one or more other components, steps, operations, and elements.

The **following** is a **list** of further preferred embodiments of the invention:
Embodiment 1. A power converter, comprising:
   a power supply unit supplying a driving current to a load;
   a sensing unit sensing a magnitude of the driving current;
   a first switch controlling an on/off time to control a flow of the driving current; and
   a control unit having a constant current driving operation and an average current driving operation corresponding to the magnitude of the driving current sensed by the sensing unit,
   wherein the constant current driving operation controls the power supply unit to make the magnitude of the driving current be a predetermined value, and the average current driving operation controls the on/off time to make an average magnitude of the driving current be the predetermined value.
Embodiment 2. The power converter according to embodiment 1, wherein the control unit includes:
   a first control module which controls the power supply unit in the constant current driving operation and the average current driving operation to generate the driving current; and
   a second control module which when the magnitude of the driving current sensed by the sensing unit exceeds the predetermined value, controls the on/off time to regulate the average of the magnitude of driving current to be the predetermined value.
Embodiment 3. The power converter according to embodiment 2, wherein:
   the power supply unit includes an inductor and a second switch which is connected to the inductor, and
   the first control module controls a turn on or off of the second switch to output a first control signal controlling a magnitude of a current flowing in the inductor.
Embodiment 4. The power converter according to embodiment 3, wherein the first control signal controls a duty ratio corresponding to the magnitude of the driving current sensed by the sensing unit.
Embodiment 5. The power converter according to embodiment 3, wherein the first control signal controls a frequency corresponding to the magnitude of the driving current sensed by the sensing unit.
Embodiment 6. The power converter according to embodiment 2, wherein the second control module compares the magnitude of the driving current sensed by the sensing unit with a reference current to determine whether the magnitude of the driving current exceeds the predetermined value.
Embodiment 7. The power converter according to embodiment 6, wherein if the magnitude of the driving current exceeds a magnitude of the reference current, the second control module outputs a second control signal which controls the on/off time corresponding to the magnitude of the driving current.
Embodiment 8. The power converter according to embodiment 2, wherein the second control module includes:
   a comparator having a negative input terminal applied with a voltage corresponding to the driving current sensed by the sensing unit and a positive input terminal applied with a voltage corresponding to a reference current; and
   a signal output device having a positive input terminal applied with an output signal of the comparator and a negative input terminal applied with a predetermined pulse to output a second control signal controlling a duty ratio corresponding to the output signal of the comparator.
Embodiment 9. A power converter, comprising:
   a power supply unit supplying a driving current to a load;
   a sensing unit sensing a magnitude of the driving current;
   a first switch controlling an on/off time to control a flow of the driving current; and
   a control unit controlling the magnitude of the driving current supplied from the power supply unit to the load and a switching operation of the first switch and controlling the power supply unit in response to a sensed result by the sensing unit to control the magnitude of the driving current supplied from the power supply unit,
   wherein the control unit, when the magnitude of the driving current exceeds a predetermined value, controls the on/off time of the first switch to control an average of the magnitude of the driving current to be the predetermined value.
Embodiment 10. The power converter according to embodiment 9, wherein the control unit includes:
   a first control module which controls the power supply unit corresponding to the result sensed by the sensing unit to control the magnitude of the driving current supplied from the power supply unit; and
   a second control module which when the magnitude of the driving current exceeds the predetermined value, controls the on/off time of the first switch to control the average of the magnitude of the driving current to be the predetermined value.
Embodiment 11. The power converter according to embodiment 10, wherein the power supply unit includes an inductor and a second switch which is connected to the inductor, and the first control module controls a turn on or off of the second switch to output a first control signal controlling a magnitude of a current flowing in the inductor.
Embodiment 12. The power converter according to embodiment 11, wherein the first control signal controls a duty ratio corresponding to the magnitude of the driving current.
Embodiment 13. The power converter according to embodiment 11, wherein the first control signal controls a frequency corresponding to the magnitude of the driving current.
Embodiment 14. The power converter according to embodiment 10, wherein the second control module compares a magnitude of the driving current sensed by the sensing unit with a reference current to determine whether the magnitude of the driving current exceeds the predetermined value.
Embodiment 15. The power converter according to embodiment 14, wherein if the magnitude of the driving current exceeds a magnitude of the reference current, the second control module outputs a second control signal which controls the on/off time corresponding to the magnitude of the driving current.
Embodiment 16. The power converter according to embodiment 10, wherein the second control module includes:
   a comparator having a negative input terminal applied with a voltage corresponding to the driving current sensed by the sensing unit and a positive input terminal applied with a voltage corresponding to a reference current; and
   a signal output device having a positive input terminal applied with an output signal of the comparator and a negative input terminal applied with a predetermined pulse to output a second control signal controlling a duty ratio corresponding to the output signal of the comparator.
Embodiment 17. A method for driving a power converter including a power supply unit controlling a current flowing in an inductor to generate a driving current, the method comprising:
   sensing the driving current flowing in a load;
   controlling an amount of the current flowing in the inductor corresponding to the sensed driving current to control a magnitude of the driving current; and
   if the magnitude of the sensed driving current exceeds a predetermined value, turning on/off a flow of the driving current to make an average of the magnitude of the driving current be the predetermined value.
Embodiment 18. The method according to embodiment 17, wherein in the controlling of the amount of the current, the magnitude of the driving current controls an on/off time of the current flowing in the inductor.
Embodiment 19. The method according to embodiment 18, wherein the on/off time is controlled by making a frequency of a control signal different.
Embodiment 20. The method according to embodiment 18, wherein the on/off time is controlled by making a duty ratio of a control signal different.

## Claims

1. A power converter, comprising:
a power supply unit supplying a driving current to a load;
a sensing unit sensing a magnitude of the driving current;
a first switch controlling an on/off time to control a flow of the driving current; and
a control unit having a constant current driving operation and an average current driving operation corresponding to the magnitude of the driving current sensed by the sensing unit,
wherein the constant current driving operation controls the power supply unit to make the magnitude of the driving current be a predetermined value, and the average current driving operation controls the on/off time to make an average magnitude of the driving current be the predetermined value.

2. The power converter according to claim 1, wherein the control unit includes:
a first control module which controls the power supply unit in the constant current driving operation and the average current driving operation to generate the driving current; and
a second control module which when the magnitude of the driving current sensed by the sensing unit exceeds the predetermined value, controls the on/off time to regulate the average of the magnitude of driving current to be the predetermined value.

3. The power converter according to claim 2, wherein:
the power supply unit includes an inductor and a second switch which is connected to the inductor, and
the first control module controls a turn on or off of the second switch to output a first control signal controlling a magnitude of a current flowing in the inductor.

4. The power converter according to claim 3, wherein the first control signal controls a duty ratio corresponding to the magnitude of the driving current sensed by the sensing unit; or wherein the first control signal controls a frequency corresponding to the magnitude of the driving current sensed by the sensing unit.

5. The power converter according to claim 2, wherein the second control module compares the magnitude of the driving current sensed by the sensing unit with a reference current to determine whether the magnitude of the driving current exceeds the predetermined value; and/or
wherein if the magnitude of the driving current exceeds a magnitude of the reference current, the second control module outputs a second control signal which controls the on/off time corresponding to the magnitude of the driving current.

6. The power converter according to claim 2, wherein the second control module includes:
a comparator having a negative input terminal applied with a voltage corresponding to the driving current sensed by the sensing unit and a positive input terminal applied with a voltage corresponding to a reference current; and
a signal output device having a positive input terminal applied with an output signal of the comparator and a negative input terminal applied with a predetermined pulse to output a second control signal controlling a duty ratio corresponding to the output signal of the comparator.

7. A power converter, comprising:
a power supply unit supplying a driving current to a load;
a sensing unit sensing a magnitude of the driving current;
a first switch controlling an on/off time to control a flow of the driving current; and
a control unit controlling the magnitude of the driving current supplied from the power supply unit to the load and a switching operation of the first switch and controlling the power supply unit in response to a sensed result by the sensing unit to control the magnitude of the driving current supplied from the power supply unit,
wherein the control unit, when the magnitude of the driving current exceeds a predetermined value, controls the on/off time of the first switch to control an average of the magnitude of the driving current to be the predetermined value.

8. The power converter according to claim 7, wherein the control unit includes:
a first control module which controls the power supply unit corresponding to the result sensed by the sensing unit to control the magnitude of the driving current supplied from the power supply unit; and
a second control module which when the magnitude of the driving current exceeds the predetermined value, controls the on/off time of the first switch to control the average of the magnitude of the driving current to be the predetermined value.

9. The power converter according to claim 8, wherein the power supply unit includes an inductor and a second switch which is connected to the inductor, and the first control module controls a turn on or off of the second switch to output a first control signal controlling a magnitude of a current flowing in the inductor.

10. The power converter according to claim 9, wherein the first control signal controls a duty ratio corresponding to the magnitude of the driving current; or
wherein the first control signal controls a frequency corresponding to the magnitude of the driving current.

11. The power converter according to any one of claims 8 to 10, wherein the second control module compares a magnitude of the driving current sensed by the sensing unit with a reference current to determine whether the magnitude of the driving current exceeds the predetermined value.

12. The power converter according to claim 11, wherein if the magnitude of the driving current exceeds a magnitude of the reference current, the second control module outputs a second control signal which controls the on/off time corresponding to the magnitude of the driving current.

13. The power converter according to any one of claims 8 to 12, wherein the second control module includes:
a comparator having a negative input terminal applied with a voltage corresponding to the driving current sensed by the sensing unit and a positive input terminal applied with a voltage corresponding to a reference current; and
a signal output device having a positive input terminal applied with an output signal of the comparator and a negative input terminal applied with a predetermined pulse to output a second control signal controlling a duty ratio corresponding to the output signal of the comparator.

14. A method for driving a power converter including a power supply unit controlling a current flowing in an inductor to generate a driving current, the method comprising:
sensing the driving current flowing in a load;
controlling an amount of the current flowing in the inductor corresponding to the sensed driving current to control a magnitude of the driving current; and
if the magnitude of the sensed driving current exceeds a predetermined value, turning on/off a flow of the driving current to make an average of the magnitude of the driving current be the predetermined value.

15. The method according to claim 14, wherein in the controlling of the amount of the current, the magnitude of the driving current controls an on/off time of the current flowing in the inductor; and/or
wherein the on/off time is controlled by making a frequency of a control signal different; or
wherein the on/off time is controlled by making a duty ratio of a control signal different.
